# EUROPEAN PATENT SPECIFICATION

(11) **EP 1 494 423 B1**
(45) Date of publication and mention of the grant of the patent: **05.03.2008**
(21) Application number: 04015621.8
(22) Date of filing: 02.07.2004
(51) Int. Cl.: H04L 29/08, H04M 3/42

(54) **Dynamic Java push controlling apparatus and method**
Vorrichtung und Verfahren zur dynamischen Steuerung von einem Java-Push
Dispositif et précédé pour contrôler dynamiquement un mécanisme de push Java

(30) Priority: 03.07.2003 KR 2003045024
(43) Date of publication of application: 05.01.2005
(73) Proprietor: LG ELECTRONICS INC., Seoul (KR)
(72) Inventor: Kim, Seung-Hoon, Eunpyeong-gu Seoul (KR)
(74) Representative: Katérle, Axel

(56) References cited:
- J. MUCHOW: "Implementing Push technology with J2ME and MIDP"[Online] 24 June 2003 (2003-06-24), pages 1,1-30, XP002363516 Internet Retrieved from the Internet: URL:http://www-128.ibm.com/developerworks/ edu/wi-dw-wi-midpreg-i.html> [retrieved on 2006-01-19]
- E. ORTIZ: "The MIDP 2.0 Push Registry"[Online] January 2003 (2003-01), pages 1-20, XP002363517 Internet Retrieved from the Internet: URL:http://developers.sun.com/techtopics/m obility/midp/articles/pushreg/> [retrieved on 2006-01-19]
- T. APPNEL: "Introducing MIDP 2.0"[Online] 18 December 2002 (2002-12-18), pages 1-3, XP002363518 Internet Retrieved from the Internet: URL:http://www.onjava.com/lpt/a/2949> [retrieved on 2006-01-19]
- JSR 118 EXPERT GROUP: "Mobile Information Device Profile for J2ME, Version 2.0"[Online] 5 November 2002 (2002-11-05), pages I-VI,1-22,89-99,444-449,501-516,543-560, XP002363519 Internet Retrieved from the Internet: URL:http://www.sun.com/software/communitys ource/j2me/midp/download20.xml> [retrieved on 2006-01-19]

## Description

### BACKGROUND OF THE INVENTION

### 1. Field of the Invention.

The present invention generally relates to a java push technique and, more particularly, to a dynamic java push controlling apparatus and method capable of dynamically downloading a required midlet and performing a corresponding service.

### 2. Description of the Related Art.

Java is an object oriented programming language developed by Sun Microsystems in the United States. Java language comes in many forms including: Standard Edition (J2SE), Java 2 Enterprise Edition (J2EE), and Java 2 Micro Edition (J2ME). Among them, J2ME refers to a Java platform suitable for a limited system environment including a mobile communication environment.

The J2ME may be implemented using a connected limited device configuration (CLDC) which handles a core portion related to execution of a midlet, a Java program, and a mobile information device profile (MIDP) constituting the midlet which places priority to a portion displayed on a screen. A midlet is a Java program that is executed after being downloaded. When stored in a system, a midlet can, for example, process a connection request from an external source.

Currently, the 2.0 version of MIDP is in distribution. This version includes a push registry, which performs the functions of registering the midlet and automatically operating the midlet upon receiving a corresponding request from an external source.

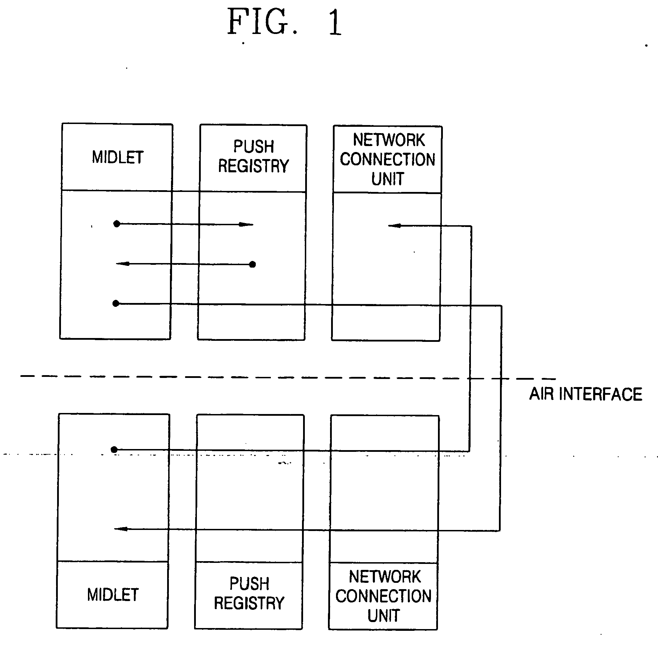

One example of a push registry is shown in Figure 1. More specifically, Fig. 1 shows a mobile terminal that includes a module divided into a network interface (network connection unit), a push registry, and a midlet. When one mobile terminal of this type requests communication from another mobile terminal, the requesting terminal inquires of the push registry of the other terminal whether a midlet exists that can communicate with a midlet of the requesting terminal. In respect to the inquiry, if the push registry of the other terminal determines that a midlet exists for communication, it drives the corresponding midlet and transfers connection information to the requesting mobile terminal.

Upon receiving the connection information, the midlet attempts to establish connection based on the information. Communication may then be established between the Java midlets of the two mobile terminals. This process is called a push mechanism in MIDP 2.0.

However, such a related art Java push mechanism using the push registry fails to sufficiently utilize basic merits of Java, namely a midlet execution environment. In order to use the push mechanism, the midlet must be registered in the push registry in advance. If not, the function provided by the corresponding midlet cannot be performed. In this case, there is no method for registering the midlet which cannot be registered immediately.

An Internet article entitled "Implementing Push technology with J2ME and MIDP" by John Muchow of 24 June 2003 describes basics of using Java push technology with MIDP 2.0, and the development of a midlet that is activated based on an incoming message.

A further Internet article entitled "The MIDP 2.0 Push Registry" by E. Ortiz of January 2003 is concerned with aspects of the push registry introduced in MIDP 2.0. The article provides an overall description of the registry's API, and how this API is used to push-enable applications.

Yet another Internet article entitled "Introducing MIDP 2.0" by Timothy Appnel and bearing a date of 18 December 2002 discusses certain features of the November 2002 release of the MIDP 2.0 specification. It mentions that MIDP 2.0 allows to find and download midlets over the air (OTA).

### SUMMARY OF THE INVENTION

An object of the present invention is to provide a dynamic Java push controlling apparatus and method which dynamically downloads a required midlet and performs a corresponding service.

To achieve the above object, the present invention provides a method according to claim 1 and a mobile terminal according to claim 7. In accordance with one embodiment a dynamic Java push controlling apparatus includes: a network connecting unit for wirelessly connecting a communication between mobile terminals; a push controlling unit for requesting a midlet for communication connection from the other mobile terminal and downloading it, if the other mobile terminal has requested a push connection but the corresponding midlet does not exist in a push registry; a push registry for receiving the midlet from the push controlling unit and registering it; and a midlet unit for storing and driving various midlets.

Preferably, if the midlet that can perform a connection in response to the connection request has been registered in the push registry, or if the midlet is downloaded and registered in the push registry, the push controlling unit hands over every authorization for the push connection over to the push registry. Preferably, the midlet unit drives the midlet under the control of the push registry.

In accordance with another embodiment, a Java push controlling method includes: checking whether there is a push connection request from outside; checking whether a midlet, that can perform a push connection in response to the push connection request from outside, has been registered; requesting a corresponding midlet from the other party to be connected and downloading it, if the corresponding midlet has not been registered; and registering the downloaded midlet and driving it to perform the requested push connection. Preferably, the push connection request is checked through port information of a push message header part.

### BRIEF DESCRIPTION OF THE DRAWINGS

Figure 1 illustrates the structure of a related-art Java push mechanism.
Figure 2 illustrates the construction of a dynamic Java push controlling apparatus in accordance with a preferred embodiment of the present invention.
Figure 3 is a flow chart showing steps included in a dynamic Java push controlling method in accordance with the preferred embodiment of the present invention.

### DETAILED DESCRIPTION OF PREFERRED EMBODIMENTS

The present invention is a system and method which allows users of a communication device, such as a mobile terminal, to communicate with each other using midlets without undergoing a certain process. This is accomplished using a push controlling unit when dynamically downloads a required midlet to perform a corresponding service. A preferred embodiment of the present invention will now be described with reference to the accompanying drawings.

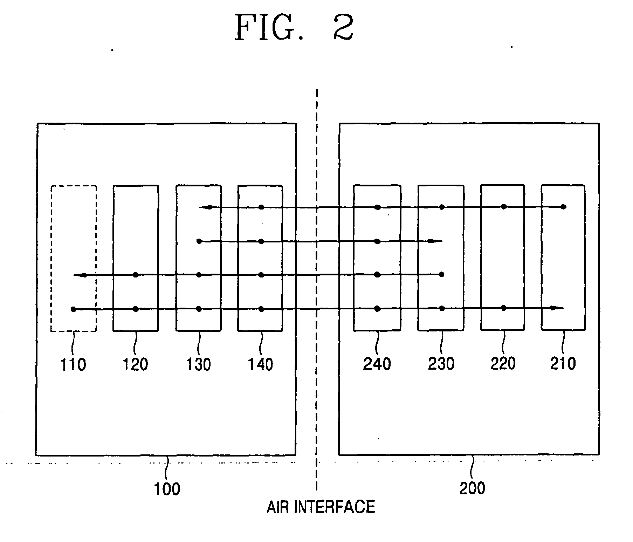

Figure 2 illustrates an internal construction of a Java-based push controlling system in accordance with a preferred embodiment of the present invention. In this embodiment, there is no midlet for performing a connection in response to a connection request received from another mobile terminal.

More specifically, the Java push controlling system includes network interfaces 140 and 240 for wirelessly establishing communications between different mobile terminals 100 and 200. The system also includes a push controlling unit 130, a push registry 120, and a midlet unit 110. The push controlling unit requests a midlet for establishing a communication connection from a push registry 220 of the other mobile terminal and downloads it, if the other mobile terminal has requested push connection but the corresponding midlet does not exist in push registry 120. The push registry 120 receives the midlet from the push controlling unit and register. The midlet unit 110 records stores various midlets and drives a corresponding midlet under the control of the push registry.

The push controlling unit 130 receives a push connection request from the other mobile terminal 200 through the network interface 140, and checks whether a corresponding midlet, namely, a Java application program for performing the requested push connection, has been registered in the push registry 120.

If there is a corresponding midlet in the push registry 120, the push controlling unit 130 determines that an environment for performing the push connection has been constructed and hands over authorization for the push connection to the push registry.

Upon receiving the control authorization for the push connection from the push controlling unit, the push registry drives the midlet required for connection, and transfers the connection information to the midlet, thereby performing the push connection. The push registry may drive the midlet required for connection using the related-art techniques or some other technique.

If the corresponding midlet has not been registered in the push registry 120, the push controlling unit requests the corresponding midlet from the other mobile terminal 200 which has requested the push connection. Then, a push registry 230 of the other mobile terminal 200 prepares the requested midlet and transmits it to the push controlling unit 130 of the corresponding mobile terminal. Then, the push controlling unit 130 stores the downloaded midlet and registers it in the push registry 120.

When the midlet required for the push connection is completely downloaded, stored and registered as mentioned above, the push controlling unit 130 determines that an environment for performing the push connection has been constructed and hands over every authorization for the push connection to the push registry 120. Upon receiving the control authorization for the push connection, the push registry 120 drives the midlet required for connection and transfers connection-related information to the midlet, thereby performing the push connection.

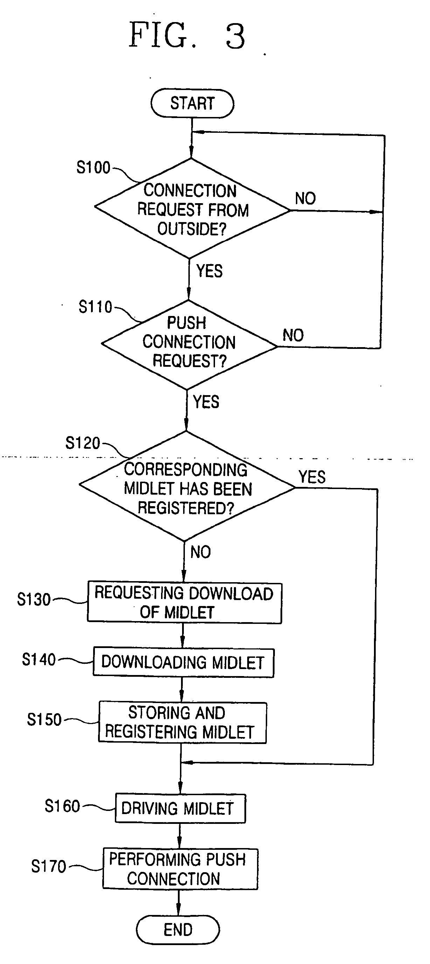

Figure 3 is a flow chart showing steps included in a dynamic Java push controlling method in accordance with the preferred embodiment of the present invention.

In an initial step, the push controller 130 checks whether there is a connection request from an outside terminal (step S100). If a connection request exists, the push controlling unit 130 determines whether the corresponding connection request is a push connection request related to a Java push technique (Step S110).

For instance, if a push message as a connection request is received, since the push message bears port information in a header part, the push controlling unit can determine whether the push message is a Java message through the port information. Regarding the port information, a unique port can be allocated to an upper application program. For example, a message transferred to a specific port from a network interface (interface) can be regarded as a Java-related message. In alternative embodiments, other techniques may be used to determine whether a push message is a Java message.

If the connection request is a push connection request, the push controlling unit 130 searches the push registry 120 to check whether the corresponding midlet, namely, a Java application program for performing the requested push connection, has been registered (Step S120).

If the corresponding midlet has not been registered in the push registry, the push controlling unit requests downloading of the corresponding midlet from the other mobile terminal 200 which has requested the push connection (Step S130).

If the other mobile terminal 200 transmits the corresponding midlet, the push controlling unit 130 downloads it (step S140), stores the downloaded midlet in the midlet unit 110, and registers it in the push registry 120 (Step S150).

When the midlet is completely registered, the push controlling unit 130 hands over a full authorization for the push connection to the push registry 120. Then, upon receiving entire authorization for the push connection, the push registry 120 drives a midlet required for connection by controlling the midlet unit 110 (Step S160).

As the midlet for performing the requested push connection is driven in the midlet unit 110 under the control of the push registry 120, the push connection is made and the mobile terminal can communicate with the other mobile terminal (Step S170).

The midlet may include all or a portion of the programs that provide services such as short message transmission, multimedia transmission, instant message transmission, and/or others using the Java push technique. In addition to communication and/or others using the Java push technique. In addition to communication between mobile terminals, a push connection between a mobile terminal and a server can be also supported.

As so far described, the dynamic Java push controlling system and method in accordance with the present invention have at least the following advantages. For example, when there is a service connection request using a Java push technique, a midlet can be downloaded dynamically to respond immediately to a corresponding service. Accordingly, users can conveniently use various services using the Java push mechanism between mobile terminals in which the J2ME is installed.

## Claims

1. A dynamic Java push controlling method comprising the steps (1), carried out by a first terminal (100), of:
- receiving (S100) a push connection request from a second terminal (200);
- checking (S120), in response to receipt of the push connection request, if a midlet required for establishing the push connection is registered in the first terminal (100);
- downloading (S140) the midlet from the second terminal (200) into the first terminal (100) if it is determined that the midlet is not registered in the first terminal; and
- driving (S160) the downloaded midlet in the first terminal (100) to establish (S170) the push connection.

2. The method of claim 1, further comprising the step of:
- checking (S110) whether a received connection request is a push connection request related to a Java push technique.

3. The method of claim 2, further comprising the step of:
- identifying the push connection request through port information in a push message header part.

4. The method of any one preceding claim, wherein the midlet is a Java application program that performs a connection in response to the push connection request.

5. The method of any one preceding claim, wherein the push connection is established between the first (100) and second terminal (200), or between the first terminals (100) and a server.

6. The method of any one preceding claim, further comprising the steps of:
- storing and registering (S150) the downloaded midlet in the first terminal (100).

7. A mobile terminal, configured to:
- receive (S100) a push connection request from an outside terminal (200);
- check (S120), in response to receipt of the push connection request, if a midiet required for establishing the push connection is registered in the mobile terminal (100);
- download (S140) the midlet from the outside terminal (200) into the mobile terminal (100) if it is determined that the midlet is not registered in the mobile terminal; and
- drive (S160) the downloaded midlet to establish (S170) the push connection.

8. The mobile terminal of claim 7, wherein the mobile terminal comprises:
- a network interface (140) configured to wirelessly connect to the outside terminal (200);
- a push controlling unit (130) configured to request the required midlet and download the midlet if the outside terminal (200) has requested a push connection but the midlet does not exist in the mobile terminal;
- a push registry (120) configured to receive the downloaded midlet from the push controlling unit (130) and register it; and
- a midlet unit (110) configured to store and drive the midlet.

9. The mobile terminal of claim 8, wherein the push controlling unit (130) is configured to:
- check whether the required midlet has been registered in the push registry (120); and
- hand over authorization for the push connection to the push registry (120) if it determines that the midlet has been registered in the push registry.

10. The mobile terminal of claim 8 or 9, wherein the midlet unit (110) is configured to drive the midlet under control of the push registry (120).

11. The mobile terminal of any one claims 8 to 10, wherein the push controlling unit (130) is configured to check the push connection request through port information included in a push message header part.

12. The mobile terminal of any one claims 7 to 11, wherein the required midlet is a Java application program for performing a push connection in response to the push connection request.

13. The mobile terminal of any one claims 7 to 12, further configured to establish the push connection with the outside terminal (200) or a server.

## Patentansprüche

1. Dynamisches Java-Push-Steuerverfahren, umfassend die von einem ersten Endgerät (100) ausgeführten Schritte:
- Empfangen (S100) einer Push-Verbindungsanforderung von einem zweiten Endgerät (200),
- Prüfen (S120) in Antwort auf den Empfang der Push-Verbindungsanforderung, ob ein für die Herstellung der Push-Verbindung erforderliches Midlet in dem ersten Endgerät (100) registriert ist,
- Herunterladen (S140) des Midlets von dem zweiten Endgerät (200) auf das erste Endgerät (100), falls festgestellt wird, dass das Midlet nicht in dem ersten Endgerät registriert ist, und
- Ausführen (S160) des heruntergeladenen Midlets im ersten Endgerät (100) zur Herstellung (S170) der Push-Verbindung.

2. Verfahren nach Anspruch 1, ferner umfassend den Schritt:
- Prüfen (S110), ob eine empfangene Verbindungsanforderung eine Push-Verbindungsanforderung ist, die sich auf eine Java-Push-Technik bezieht.

3. Verfahren nach Anspruch 2, ferner umfassend den Schritt:
- Erkennen der Push-Verbindungsanforderung anhand von Portinformationen in einem Push-Nachrichtenkopfteil.

4. Verfahren nach einem der vorhergehenden Ansprüche, wobei das Midlet ein Java-Applikationsprogramm ist, das eine Verbindung in Antwort auf die Push-Verbindungsanforderung vornimmt.

5. Verfahren nach einem der vorhergehenden Ansprüche, wobei die Push-Verbindung zwischen dem ersten (100) und dem zweiten Endgerät (200) oder zwischen dem ersten Endgerät (100) und einem Server hergestellt wird.

6. Verfahren nach einem der vorhergehenden Ansprüche, ferner umfassend die Schritte:
- Speichern und Registrieren (S150) des heruntergeladenen Midlets im ersten Endgerät (100).

7. Mobiles Endgerät, welches dazu eingerichtet ist:
- eine Push-Verbindungsanforderung von einem anderen Endgerät (200) zu empfangen (S100),
- in Antwort auf den Empfang der Push-Verbindungsanforderung zu prüfen (S120), ob ein für die Herstellung der Push-Verbindung erforderliches Midlet in dem mobilen Endgerät (100) registriert ist,
- das Midlet von dem anderen Endgerät (200) auf das mobile Endgerät (100) herunterzuladen (S140), falls festgestellt wird, dass das Midlet nicht in dem mobilen Endgerät registriert ist, und
- das heruntergeladene Midlet auszuführen (S160), um die Push-Verbindung herzustellen (S170).

8. Mobiles Endgerät nach Anspruch 7, wobei das mobile Endgerät umfasst:
- eine Netzwerkschnittstelle (140), welche für eine drahtlose Verbindung zu dem anderen Endgerät (200) eingerichtet ist,
- eine Push-Steuereinheit (130), welche dazu eingerichtet ist, das erforderliche Midlet anzufordern und das Midlet herunterzuladen, falls das andere Endgerät (200) eine Push-Verbindung anfordert, aber das Midlet nicht in dem mobilen Endgerät vorhanden ist,
- ein Push-Register (120), welches dazu eingerichtet ist, das heruntergeladene Midlet von der Push-Steuereinheit (130) entgegenzunehmen und es zu registrieren, und
- eine Midlet-Einheit (110), welche dazu eingerichtet ist, das Midlet zu speichern und auszuführen.

9. Mobiles Endgerät nach Anspruch 8, wobei die Push-Steuereinheit (130) dazu eingerichtet ist:
- zu prüfen, ob das erforderliche Midlet in dem Push-Register (120) registriert ist, und
- die Befugnis für die Push-Verbindung auf das Push-Register (120) zu übertragen, falls festgestellt wird, dass das Midlet in dem Push-Register registriert ist.

10. Mobiles Endgerät nach Anspruch 8 oder 9, wobei die Midlet-Einheit (110) dazu eingerichtet ist, das Midlet unter Steuerung des Push-Registers (120) auszuführen.

11. Mobiles Endgerät nach einem der Ansprüche 8 bis 10, wobei die Push-Steuereinheit (130) dazu eingerichtet ist, die Push-Verbindungsanforderung anhand von Portinformationen zu prüfen, die in einem Push-Nachrichtenkopfteil enthalten sind.

12. Mobiles Endgerät nach einem der Ansprüche 7 bis 11, wobei das erforderliche Midlet ein Java-Applikationsprogramm für die Vornahme einer Push-Verbindung in Antwort auf die Push-Verbindungsanforderung ist.

13. Mobiles Endgerät nach einem der Ansprüche 7 bis 12, ferner dazu eingerichtet, die Push-Verbindung mit dem anderen Endgerät (200) oder einem Server herzustellen.

## Revendications

1. Procédé dynamique de commande de poussée Java comprenant les étapes, effectuées par un premier terminal (100), consistant à :
- recevoir (S100) une demande de connexion de poussée provenant d'un deuxième terminal (200) ;
- contrôler (S120), en réponse à la réception de la demande de connexion de poussée, si un midlet requis pour établir la connexion de poussée est enregistré dans le premier terminal (100) ;
- télécharger (S140) le midlet depuis le deuxième terminal (200) dans le premier terminal (100) s'il est déterminé que le midlet n'est pas enregistré dans le premier terminal ; et
- conduire (S160) le midlet téléchargé dans le premier terminal (100) pour établir (S170) la connexion de poussée.

2. Procédé selon la revendication 1, comprenant en outre l'étape consistant à :
- contrôler (S110) si une demande de connexion reçue est une demande de connexion de poussée liée à une technique de poussée Java.

3. Procédé selon la revendication 2, comprenant en outre l'étape consistant à :
- identifier la demande de connexion de poussée au moyen des informations de port dans une partie d'en-tête d'un message de poussée.

4. Procédé selon l'une quelconque des revendications précédentes, dans lequel le midlet est un programme d'application Java qui réalise une connexion en réponse à la demande de connexion de poussée.

5. Procédé selon l'une quelconque des revendications précédentes, dans lequel la connexion de poussée est établie entre le premier (100) et le deuxième terminal (200), ou entre le premier terminal (100) et un serveur.

6. Procédé selon l'une quelconque des revendications précédentes, comprenant en outre les étapes consistant à :
- stocker et enregistrer (S150) le midlet téléchargé dans le premier terminal (100).

7. Terminal mobile configuré pour :
- recevoir (S100) une demande de connexion de poussée provenant d'un terminal externe (200) ;
- contrôler (S120), en réponse à la réception de la demande de connexion de poussée, si un midlet requis pour établir la connexion de poussée est enregistré dans le terminal mobile (100) ;
- télécharger (S140) le midlet depuis le terminal externe (200) dans le terminal mobile (100) s'il est déterminé que le midlet n'est pas enregistré dans le terminal mobile ; et
- conduire (S160) le midlet téléchargé pour établir (S170) la connexion de poussée.

8. Terminal mobile selon la revendication 7, dans lequel le terminal mobile comprend :
- une interface réseau (140) configurée pour se connecter sans fil au terminal externe (200) ;
- une unité de commande de poussée (130) configurée pour demander le midlet requis et télécharger le midlet si le terminal externe (200) a demandé une connexion de poussée mais le midlet n'existe pas dans le terminal mobile ;
- une base de registre de poussée (120) configurée pour recevoir le midlet téléchargé depuis l'unité de commande de poussée (130) et l'enregistrer ; et
- une unité de midlet (110) configurée pour stocker et conduire le midlet.

9. Terminal mobile selon la revendication 8, dans lequel l'unité de commande de poussée (130) est configurée pour :
- vérifier si le midlet requis a été enregistré dans la base de registre de poussée (120) ; et
- transférer l'autorisation pour la connexion de poussée à la base de registre de poussée (120) si elle détermine que le midlet a été enregistré dans la base de registre de poussée.

10. Terminal mobile selon la revendication 8 ou 9, dans lequel l'unité de midlet (110) est configurée pour conduire le midlet sous le contrôle de la base de registre de poussée (120).

11. Terminal mobile selon l'une quelconque des revendications 8 à 10, dans lequel l'unité (130) de commande de poussée est configurée pour contrôler la demande de connexion de poussée au moyen des informations de port comprises dans une partie d'en-tête du message de poussée.

12. Terminal mobile selon l'une quelconque des revendications 7 à 11, dans lequel le midlet requis est un programme d'application Java pour réaliser une connexion de poussée en réponse à la demande de connexion de poussée.

13. Terminal mobile selon l'une quelconque des revendications 7 à 12, configuré en outre pour établir la connexion de poussée avec le terminal externe (200) ou un serveur.
